# EUROPÄISCHE PATENTSCHRIFT

(11) **EP 3 601 757 B1**
(45) Veröffentlichungstag und Bekanntmachung des Hinweises auf die Patenterteilung: **12.05.2021**
(21) Anmeldenummer: 18713584.3
(22) Anmeldetag: 16.03.2018
(51) Int. Cl.: F01N 3/20, F01N 3/28, F01N 13/00, F01N 13/08

(54) **ABGASSYSTEM**
EXHAUST SYSTEM
SYSTÈME D'ÉCHAPPEMENT

(30) Priorität: 27.03.2017 DE 102017205159
(43) Veröffentlichungstag der Anmeldung: 05.02.2020
(73) Patentinhaber: Vitesco Technologies GmbH, 30165 Hannover (DE)
(72) Erfinder: BRUGGER, Marc, 53819 Neunkirchen-Seelscheid (DE); KRUSE, Carsten, 53842 Troisdorf (DE); BOHNE, Frank, 39171 Sülzetal (DE)
(86) Internationale Anmeldenummer: PCT/EP2018/056697
(87) Internationale Veröffentlichungsnummer: WO 2018/177778

(56) Entgegenhaltungen:
- EP-A1- 3 141 719
- WO-A1-2011/106487
- DE-A1-102010 034 705
- DE-A1-102012 006 365
- GB-A- 2 454 276

## Beschreibung

### Technisches Gebiet

Die Erfindung betrifft ein Abgassystem zur Nachbehandlung von Abgasen eines Verbrennungsmotors, mit einem von Abgas durchströmbaren Ringkatalysator, wobei der Ringkatalysator eine Einströmstelle und eine Ausströmstelle aufweist und der Ringkatalysator eine rohrförmige erste Strömungsstrecke ausweist und eine ringförmige zweite Strömungsstrecke aufweist, die konzentrisch zueinander ausgerichtet sind, und nacheinander durchströmbar sind, wobei die erste Strömungsstrecke in radialer Richtung nach Außen von der zweiten Strömungsstrecke umschlossen ist.

### Stand der Technik

In Abgasnachbehandlungssystemen werden zur Einhaltung der gesetzlich vorgegebenen Grenzen für den Schadstoffausstoß und insbesondere hinsichtlich der Stickoxide neue Techniken eingesetzt. Hierzu zählt beispielsweise die Einspritzung einer wässrigen Harnstofflösung (Handelsname: AdBlue) zur chemischen Reduktion von Stickoxiden. Die wässrige Harnstofflösung weist beispielsweise einen Anteil von ca. 33% reinem Harnstoff auf, der in ca. 67% demineralisiertem Wasser gelöst ist. Durch die Thermolyse und Hydrolyse der wässrigen Harnstofflösung wird Ammoniak erzeugt, der mit den Stickoxiden im Abgas reagiert und zu Stickstoff und Wasserdampf umsetzt.

Um den in der wässrigen Harnstofflösung gebundenen Ammoniak freizusetzten, muss die Lösung verdampft werden. Hierzu wird eine ausreichend hohe Systemtemperatur benötigt und weiterhin eine genügend lange Strömungstrecke zur Vermischung der wässrigen Harnstofflösung beziehungsweise des bereits verdampften Ammoniaks mit dem strömenden Abgas.

Die DE 10 2010 034 705 A1 offenbart eine Abgasbehandlungseinheit mit strömungstechnisch hintereinander angeordnet einem Hinströmbereich, einem Umlenkbereich, einem Rückströmbereich und einem Abströmbereich, wobei der Rückströmbereich und der Abströmbereich auf einer Außenfläche des Hinströmbereichs angeordnet sind, sowie eine Zugabeeinheit für ein Reaktionsmittel vorgesehen ist, wobei die Zugabeeinheit im Abströmbereich angeordnet ist.

Die DE 10 2012 006 365 A1 offenbart eine Abgasanlage für ein Fahrzeug mit einer Dosiereinrichtung zum Einbringen eines Reduktionsmittels für die Abgasnachbehandlung in das Abgas. Stromabwärts der Dosiereinrichtung ist eine zum Vermischen des Reduktionsmittels mit dem Abgas ausgebildete Mischeinrichtung angeordnet. Zum Einbringen von Heizwärme in die Mischeinrichtung ist diese mit einer stromaufwärts der Dosiereinrichtung angeordneten Komponente der Abgasanlage, etwa mit einem Abgaskrümmer, wärmeleitend gekoppelt.

Nachteilig in den Abgasnachbehandlungssystemen, die aus dem Stand der Technik bekannt sind, ist, dass die Verdampfungsstrecke und die Mischstrecke nicht optimal gestaltet sind, wodurch es insbesondere bei niedrigen Abgastemperaturen zu einer Verzögerung bei der Aktivierung der Abgasnachbehandlung beziehungsweise bis zum Erreichen einer gewissen Umsetzungsrate kommt. Dies liegt insbesondere daran, dass die Eindosierung der wässrigen Harnstofflösung erst ab einer Mindesttemperatur erfolgt, um sicherzustellen, dass die flüssige Harnstofflösung schnell verdampft werden kann und nicht noch in flüssiger Form vom Abgasstrom mitgerissen wird und sich schließlich im Abgassystem absetzt oder in die Umwelt entweicht.

### Darstellung der Erfindung, Aufgabe, Lösung, Vorteile

Daher ist es die Aufgabe der vorliegenden Erfindung ein Abgassystem zu schaffen, welches eine besonders schnelle Aufheizung ermöglicht und somit eine besonders frühe Eindosierung erlaubt, wodurch bereits kurz nach dem Start des vorgeschalteten Verbrennungsmotors eine Eindosierung der wässrigen Harnstofflösung möglich wird.

Die Aufgabe hinsichtlich des Abgassystems wird durch ein Abgassystem mit den Merkmalen von Anspruch 1 gelöst.

Ein Ausführungsbeispiel der Erfindung betrifft ein Abgassystem zur Nachbehandlung von Abgasen eines Verbrennungsmotors, mit einem von Abgas durchströmbaren Ringkatalysator, wobei der Ringkatalysator eine Einströmstelle und eine Ausströmstelle aufweist und der Ringkatalysator eine rohrförmige erste Strömungsstrecke ausweist und eine ringförmige zweite Strömungsstrecke aufweist, die konzentrisch zueinander ausgerichtet sind, und nacheinander durchströmbar sind, wobei die erste Strömungsstrecke in radialer Richtung nach Außen von der zweiten Strömungsstrecke umschlossen ist, wobei in radialer Richtung ein Rohr von außen durch die zweite Strömungsstrecke geführt ist, wobei das Rohr in den Ringkatalysator mündet und das Rohr eine radiale Erstreckung zumindest bis in die innere erste Strömungsstrecke hinein aufweist.

Ein Ringkatalysator ist insbesondere für eine besonders motornahe Montage vorteilhaft, da er einen geringen Bauraumbedarf hat und gleichzeitig eine schnelle und effektive Aufheizung ermöglicht. Durch die beiden ringförmigen Strömungskanäle wird eine im Wesentlichen doppelt so lange Strömungsstrecke erreicht als bei einem konventionellen Katalysator ohne Umlenkung des Abgases.

Bevorzugt ist die radial innen liegende Strömungsstrecke mit der Einströmstelle verbunden, so dass das Abgas über die erste Strömungsstrecke in den Ringkatalysator einströmen kann. Nach dem axialen Durchströmen der ersten Strömungsstrecke wird das Abgas um 180 Grad umgelenkt und strömt in die zweite Ringförmige Strömungsstrecke, die radial außenliegend die erste Strömungsstrecke umschließt. Nach dem Durchströmen der zweiten Strömungsstrecke in einer axialen Richtung, die der Strömungsrichtung in der ersten Strömungsstrecke entgegengesetzt ist, strömt das Abgas in einer radialen Richtung aus dem Ringkatalysator aus beziehungsweise über in einen Kanal, der das Abgas letztlich aus dem Ringkatalysator hinausleitet. In den Strömungsstrecken können Filterkörper oder weitere Katalysatoren angeordnet sein, die das strömende Abgas filtern und chemisch umwandeln, um den Ausstoß an Emissionen möglichst gering zu halten.

Das Rohr führt durch eine die zweite Strömungsstrecke nach außen begrenzende Wandung hindurch in das Innere des Ringkatalysators hinein. Das Rohr ragt in radialer Richtung dabei zumindest durch die zweite Strömungsstrecke hinein bis in die in radialer Richtung im Zentrum liegende erste Strömungsstrecke. In das Rohr kann über einen Injektor die wässrige Harnstofflösung eindosiert werden. Die wässrige Harnstofflösung kann sich in der Folge in dem Rohr ausbreiten und hin zum offenen Ende des Rohres in den Ringkatalysator hineinströmen.

Das Rohr wird durch das um das Rohr strömende Abgas erhitzt, wodurch die Thermolyse und die Hydrolyse begünstigt werden. Insbesondere an den Stellen, an denen die wässrige Harnstofflösung direkt mit der Wandung des Rohrs in Kontakt tritt, kann die Verdampfung der wässrigen Harnstofflösung besonders vorteilhaft erfolgen. Durch eine Variation der radialen Erstreckung des Rohres kann diese Verdampfungsstrecke variiert werden.

Die verdampfte wässrige Harnstofflösung tritt schließlich an der dem Injektor gegenüber liegenden Seite des Rohres aus und strömt in den Abgasstrom über. Abhängig davon wie weit sich das Rohr in den Ringkatalysator hinein erstreckt, strömt die verdampfte Harnstofflösung in die erste Strömungsstrecke oder die zweite Strömungsstrecke über, wo sich die verdampfte Harnstofflösung mit dem Abgas vermischt und die Umsetzung der im Abgas mitgeführten Stickoxide zu Stickstoff und Wasser auslöst.

Besonders vorteilhaft ist es, wenn das Abgas an einem ersten axialen Endbereich des Ringkatalysators durch die Einströmstelle in die radial innere erste Strömungsstrecke strömbar ist und an dem der Einströmstelle gegenüberliegenden zweiten axialen Endbereich des Ringkatalysators durch eine Strömungsumlenkung in die radial äußere zweite Strömungsstrecke strömbar ist, in welcher es entgegen der Strömungsrichtung in der radial inneren ersten Strömungsstrecke zurück zum ersten axialen Endbereich strömbar ist, und wobei das Abgas an dem ersten axialen Endbereich in einen Kanal strömbar ist, der zu einer Ausströmstelle führt.

Die erste und die zweite Strömungsstrecke erstrecken sich jeweils in axialer Richtung des Ringkatalysators. Die erste radial innere Strömungsstrecke ist durch ein Rohr gebildet. Die zweite radial äußere Strömungsstrecke ist ringförmig und umschließt die erste radial innere Strömungsstrecke zumindest in weiten Teilen. Am der Einströmstelle entgegengesetzten axialen Endbereich der ersten Strömungsstrecke ist eine deckelartige Struktur angeordnet, die zur Umlenkung des Abgasstroms in die zweite radial äußere Strömungsstrecke dient.

Am axialen Endbereich, der auch die Einströmstelle aufweist, ist in radialer Richtung an einer Außenwandung des Ringkatalysators eine Ausströmstelle angeordnet, durch die das Abgas aus dem Ringkatalysator ausströmen kann. In einer vorteilhaften Ausführung kann die Ausströmung auch durch das Überleiten des Abgases aus der zweiten Strömungsstrecke in radialer Richtung in einen in axialer Richtung verlaufenden Kanal erfolgen, der sich vollständig oder teilweise parallel zur ersten und/oder zweiten Strömungsstrecke erstreckt und zu einer alternativen Ausströmstelle führt.

Auch ist es vorteilhaft, wenn die wässrige Harnstofflösung in radialer Richtung in das Rohr eindosierbar ist. Die Eindosierung in das Rohr entlang einer radialen Richtung, entlang welcher sich auch das Rohr selbst erstreckt, ist vorteilhaft, um eine möglichst große Kontaktfläche für die wässrige Harnstofflösung zu bieten und gleichzeitig eine möglichst optimale Ausbreitung der wässrigen Harnstofflösung innerhalb des Rohres zu erreichen. Je stärker die wässrige Harnstofflösung mit der durch das Abgas aufgeheizten Rohrwandung in Kontakt kommt und je feiner die wässrige Harnstofflösung in dem Rohr verteilt ist, umso einfacher kann die Thermolyse und die Hydrolyse der wässrigen Harnstofflösung erfolgen.

Ein bevorzugtes Ausführungsbeispiel ist dadurch gekennzeichnet, dass das Rohr eine radiale Erstreckung durch die radial innere erste Strömungstrecke hindurch bis in die radial äußere zweite Strömungsstrecke aufweist. Dies ist vorteilhaft, um eine möglichst lange Strecke des Rohres mit dem Abgas aus der ersten Strömungsstrecke und dem Abgas aus der zweiten Strömungsstrecke zu umströmen, um so die Temperatur im Rohr möglichst hoch zu halten und schnell eine vollständige Verdampfung zu ermöglichen. Auch ist es zu bevorzugen, wenn das Rohr einen sich konisch verjüngenden Querschnitt aufweist. Dies ist vorteilhaft, um die Strömung der wässrigen Harnstofflösung beziehungsweise der verdampften Harnstofflösung zu konzentrieren und möglichst zielgerichtet in den Ringkatalysator abzugeben.

Darüber hinaus ist es vorteilhaft, wenn das Rohr an dem axialen Endbereich des Ringkatalysators angeordnet ist, an dem das Abgas in den Ringkatalysator durch die Einströmstelle einströmbar ist. Dies ist vorteilhaft, um das Rohr möglichst früh mit dem Abgas in Kontakt zu bringen und so die höchstmögliche Temperatur des Abgases auszunutzen. Mit der Zunahme der Länge der Strömungsstrecke vom Verbrennungsmotor zum Ringkatalysator nimmt die Temperatur des Abgases am Ringkatalysator stetig ab, sofern keine weiteren Mittel zur Aufheizung vorgesehen sind. Da eine gewisse Mindesttemperatur notwendig ist, um die Verdampfung der wässrigen Harnstofflösung durchführen zu können, ist es vorteilhaft, wenn die zur Verfügung stehende Wärme bestmöglich genutzt wird. Daher ist es vorteilhaft, wenn die Eindosierung der wässrigen Harnstofflösung möglichst nahe am Verbrennungsmotor erfolgt. Je früher die Mindesttemperatur zur Verdampfung der wässrigen Harnstofflösung erreicht wird, umso früher kann mit der Eindosierung der Harnstofflösung begonnen werden, wodurch erst die Reduzierung der Stickoxide besonders wirkungsvoll erreicht wird. Grundsätzlich ist die Position der Eindosierung hinsichtlich der Abgastemperatur weniger wichtig als die Position des Verdampfungselementes zur Verdampfung der wässrigen Harnstofflösung. In erster Linie soll das Verdampfungselement, welches in einer erfindungsgemäßen Ausführung durch das Rohr gebildet ist, eine schnelle Aufheizung erfahren.

Weiterhin ist es vorteilhaft, wenn das Rohr an seiner inneren Mantelfläche und/oder an seiner äußeren Mantelfläche Oberflächenvergrößerungselemente aufweist.

Dies ist vorteilhaft, um eine möglichst große Oberfläche zu erzeugen, über welche Wärme zwischen der Wandung des Rohres und der wässrigen Harnstofflösung übertragen werden kann. Besonders vorteilhaft können beispielsweise Erhöhungen und Vertiefungen vorgesehen werden, Finnen, oder andere Leitelemente, die die Strömung der wässrigen Harnstofflösung positiv beeinflussen und gleichzeitig die Oberfläche vergrößern.

Diese Elemente zur Vergrößerung der Oberfläche können sowohl an der Innenseite als auch an der Außenseite des Rohres vorgesehen sein, um einen möglichst effektiven Wärmeübergang zu erzeugen.

Auch ist es zweckmäßig, wenn das Rohr an seiner inneren Mantelfläche und/oder an seiner äußeren Mantelfläche strukturiert ausgebildet ist und/oder beschichtet ist. Insbesondere Mikrostrukturen, wie Riefen oder Rillen können vorteilhaft zur Vergrößerung der Oberfläche genutzt werden, um den Wärmeübergang zu verbessern. Auch sind Strukturen vorteilhaft, die beispielsweise helfen eine turbulente Strömung des Abgases außen und der wässrigen Harnstofflösung innen zu erzeugen, wodurch auch eine größere Wärmemenge übertragen werden kann.

Weiterhin können die Außenseite und/oder die Innenseite des Rohres mit einer Beschichtung überzogen sein. Hier können beispielswiese keramische oder metallische Beschichtungen vorgesehen werden, die ebenfalls den Wärmeübergang verbessern. Diese Schichten können beispielsweise unter Zuhilfenahme von bekannten Verfahren auf die Oberflächen des Rohres aufgetragen werden.

Darüber hinaus ist es vorteilhaft, wenn durch das Rohr eine dritte Strömungsstrecke gebildet wird, die von dem Abgas in der ersten Strömungsstrecke und der zweiten Strömungsstrecke umströmbar ist. Dies ist vorteilhaft, um für die wässrige Harnstofflösung eine eigenen Strömungsstrecke zu schaffen, die möglichst lang ist, um eine ausreichende Verdampfung der wässrigen Harnstofflösung durch das Vollständige Durchlaufen der Thermolyse und der Hydrolyse zu ermöglichen. Erst die vorteilhafterweise vollständig verdampfte Harnstofflösung tritt dann aus der dritten Strömungsstrecke in eine der anderen Strömungsstrecken des Ringkatalysators aus.

Weiterhin ist es zweckmäßig, wenn in das Rohr ein Hydrolysekatalysator integriert ist. Ein Hydrolysekatalysator ist besonders vorteilhaft, um den zweiten Teil der Verdampfung, die Hydrolyse, zu beschleunigen und so schneller die vollständige Verdampfung der Harnstofflösung zu erreichen. Dies begünstigt in der Folge auch die Umwandlung der Stickoxide im Abgasstrom, wodurch die Emissionen im Abgas deutlich gesenkt werden können.

Auch ist es vorteilhaft, wenn der Einströmstelle ein Abgasturbolader vorgeschaltet ist, wobei das aus dem Abgasturbolader ausströmende Abgas durch die Einströmstelle in den Ringkatalysator einströmbar ist. Insbesondere bei einer sehr motornahen Anordnung des Ringkatalysators kann eine schnelle Aufheizung des Rohres und damit eine sehr schnelle Verdampfung der Harnstofflösung erreicht werden. Eine Anordnung des Ringkatalysators direkt hinter dem Abgasturbolader ist daher vorteilhaft.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:

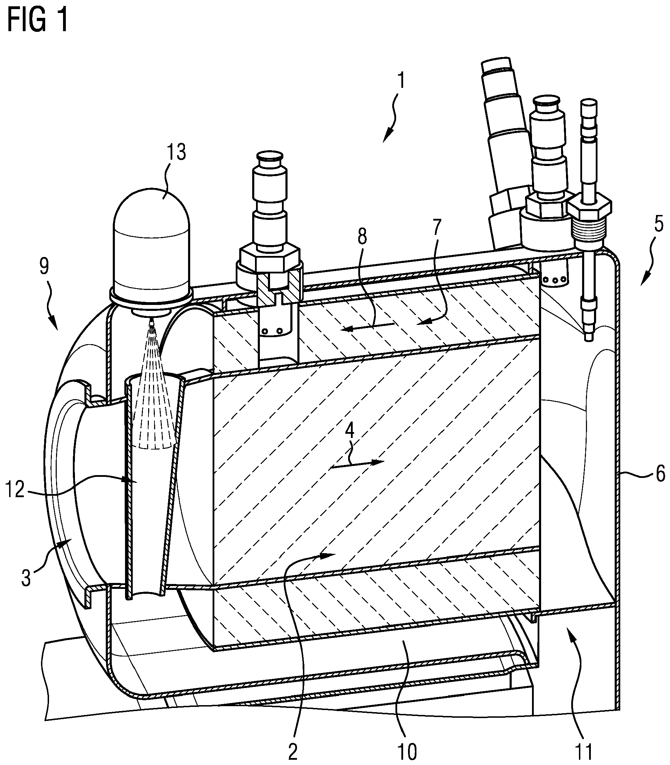

- Fig. 1: eine Schnittansicht durch einen erfindungsgemäßen Ringkatalysator, wobei die zentral verlaufende rohrförmige erste Strömungsstrecke abgebildet ist, die von einer ringförmigen zweiten Strömungsstrecke umschlossen ist, wobei von außen ein Rohr durch die zweite und die erste Strömungsstrecke geführt ist, in welches die wässrige Harnstofflösung eindosiert werden kann, und

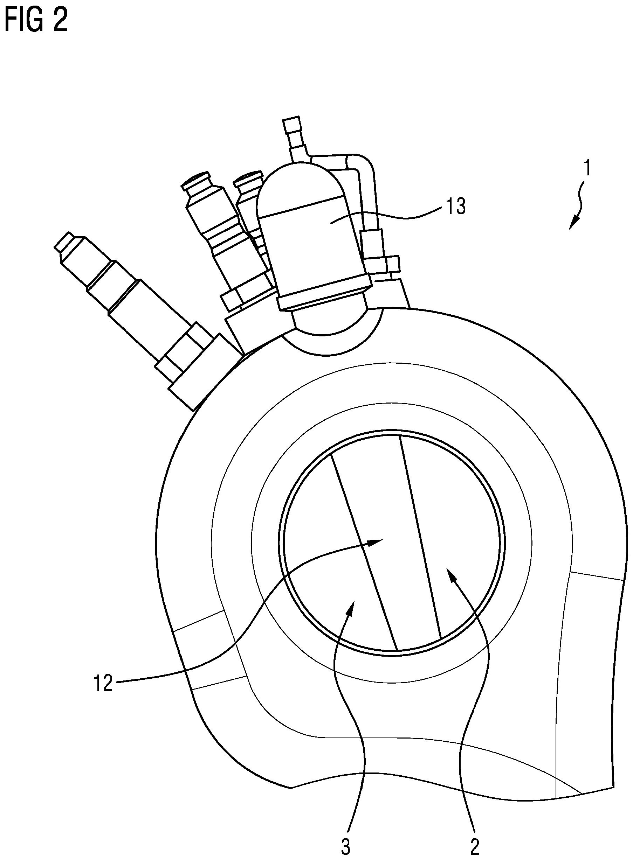

- Fig. 2: eine Seitenansicht des Ringkatalysators aus Figur 1, wobei der Blick auf die Einströmstelle an der ersten Strömungsstrecke gerichtet ist und besonders gut das Rohr zu sehen ist, welches von außen durch die Außenwandung der ringförmigen zweiten Strömungsstrecke in den Ringkatalysator geführt ist und die rohrförmige erste Strömungsstrecke in radialer Richtung durchdringt.

### Bevorzugte Ausführung der Erfindung

Die Figur 1 zeigt einen Ringkatalysator 1. Der Ringkatalysator 1 weist eine erste rohrförmige Strömungsstrecke 2 auf, die durch eine Einströmstelle 3 mit Abgas beaufschlagt werden kann. Das Abgas kann entlang der rohrförmigen ersten Strömungsstrecke 2 in axialer Richtung 4 strömen und wird an dem axialen Endbereich 5, der der Einströmstelle 3 gegenüberliegt, durch das Gehäuse 6 um 180 Grad umgelenkt und strömt in die ringförmige zweite Strömungsstrecke 7 über. In der ringförmigen zweiten Strömungsstrecke 7 strömt das Abgas entgegen der axialen Richtung 4 entlang der axialen Richtung 8 hin zum axialen Endbereich 9, der die Einströmstelle 3 aufweist. An diesem axialen Endbereich 9 kann das Abgas entlang einer radialen Richtung in einen Kanal 10 ausströmen, der zumindest teilweise parallel zu den Strömungsstrecken 2, 7 verläuft. Über diesen Kanal 10 wird das Abgas weiteren Abgasnachbehandlungskomponenten zugeführt.

Im Ausführungsbeispiel der Figur 1 weist der Kanal 10 am axialen Endbereich 5 eine Ausströmsstelle 11 auf, die ein Ausströmen des Abgases in radialer Richtung aus dem Ringkatalysator 1 hinaus ermöglicht. Auch die Stelle an der das Abgas vom der zweiten Strömungsstrecke 7 in den Kanal 10 übertritt kann als Ausströmstelle bezeichnet werden.

Weiterhin ist in Figur 1 ein Rohr 12 gezeigt, welches die die zweite ringförmige Strömungsstrecke 7 nach außen begrenzende Gehäusewandung durchdringt und in radialer Richtung durch die zweite Strömungsstrecke 7 und die erste Strömungsstrecke 2 hindurchgeführt ist und in den unteren Bereich der zweiten Strömungsstrecke 7 mündet, die zu dem radialen Übertritt in den Kanal 10 benachbart ist.

An der Außenseite des Ringkatalysators 1 ist ein Dosiermodul 13 angeordnet, welches zur Eindosierung der wässrigen Harnstofflösung in das Rohr 12 hinein genutzt wird. Der Injektor des Dosiermoduls 13 ragt derart in das Rohr 12 hinein, dass die wässrige Harnstofflösung in radialer Richtung des Ringkatalysators 1 und in axialer Richtung des Rohres 12 in das Rohr 12 eindosiert wird.

Das Rohr 12 wird in axialer Richtung 4 mit dem Abgas, welches durch die Einströmstelle 3 in den Ringkatalysator 1 einströmt, umströmt. Es findet dabei eine Aufheizung des Rohres 12 statt, indem Wärmeenergie aus dem strömenden Abgas auf die Wandung des Rohres 12 übertragen wird. Durch die Übertragung der Wärme aus dem Abgas auf das Rohr 12 und somit auf die wässrige Harnstofflösung, die in das Rohr 12 eindosiert wird, werden die Thermolyse und die Hydrolyse begünstigt, wodurch es zu einer Verdampfung der wässrigen Harnstofflösung kommt, bei der Ammoniak in gasförmiger Form und Kohlendioxid entsteht. Der Ammoniak reagiert in der Folge mit den Stickoxiden im Abgas zu Stickstoff und Wasser.

Das Rohr 12 dient somit als Verdampfungsstrecke für die wässrige Harnstofflösung. Durch die vorteilhafte Anordnung des Rohres 12 an der Einlassseite des Ringkatalysators 1 trifft das Abgas mit einer hohen Temperatur auf das Rohr 12, wodurch es zu einer besonders schnellen Aufheizung des Rohres 12 und somit zu einer schnellen Verdampfung der wässrigen Harnstofflösung kommt. Insbesondere die Anordnung des Ringkatalysators 1 in direkter Nähe zum Verbrennungsmotor, beispielsweise hinter dem Abgasturbolader, trägt dazu bei, dass das Abgas keine starke Abkühlung erfährt, bevor es in den Ringkatalysator 1 eintritt und auf das Rohr 12 trifft. Dadurch kann erreicht werden, dass die Zeit bis zur Aktivierung der Eindosierung der wässrigen Harnstofflösung, die erst nach dem Erreichen einer Mindesttemperatur gestartet werden kann, möglichst gering ist. Dies führt zu einer schnelleren vollständigen Abgasnachbehandlung und somit insbesondere auch beim Kaltstart zu einer schnelleren Senkung der Emissionen im Abgas.

Das Rohr 12 ist im Ausführungsbeispiel der Figur 1 vollständig durch die erste Strömungsstrecke 2 hindurchgeführt, so dass die Harnstofflösung nicht in die erste Strömungsstrecke 2 übertreten kann. Das Rohr 12 mündet in die zweite Strömungsstrecke 7, so dass die Harnstofflösung hier in den Abgasstrom überströmt und mit dem Abgasstrom mitgerissen wird. Die Reaktion zwischen dem erzeugten Ammoniak und den Stickoxiden im Abgas erfolgt daher dem Rohr 12 nachgelagert und im Wesentlichen im Kanal 10.

In alternativen Ausgestaltungen kann das Rohr auch in der ersten Strömungsstrecke münden oder zumindest einen ersten Auslass in diese Strömungsstrecke hinein aufweisen. Dies würde ein Ausströmen der Harnstofflösung in den Abgasstrom in der ersten Strömungsstrecke ermöglichen. Auch könnte im Bereich der Eindosierstelle eine Öffnung vorgesehen werden, die das Einströmen von Abgas aus der zweiten Strömungsstrecke in das Rohr hinein ermöglicht. Dies würde die Vermischung der Harnstofflösung mit dem Abgas beschleunigen und die Austragungsrate der Harnstofflösung in den Abgasstrom erhöhen.

In Figur 1 ist das Rohr 12 als sich konisch von der Eindosierstelle verjüngendes Rohr 12 mit glatten Wandungen dargestellt. In alternativen Ausführungen kann der Querschnitt des Rohres auch abweichend gestaltet sein. Auch können die Wandungen des Rohres Strukturen zur Oberflächenvergrößerung und/oder Beschichtungen aufweisen. Auch kann das Rohr, welches in der Figur 1 leicht aus der Vertikalen heraus ausgelenkt verläuft, anders ausgerichtet werden. Es ist dabei insbesondere vorteilhaft, wenn das Rohr auf die Ausströmstelle des Ringkatalysators ausgerichtet ist, um die verdampfte Harnstofflösung derart in den Abgasstrom zu überführen, dass diese möglichst rückstandslos mitgerissen wird und sich bestmöglich im Abgasstrom verteilt.

Die Figur 2 zeigt eine seitliche Ansicht des Ringkatalysators 1. In Figur 2 ist zu erkennen, dass das Rohr 12 im Inneren des Ringkatalysators 1 geneigt zur Vertikalen verläuft, so dass die Mündung des Rohres 2 in Richtung der Überströmstelle von der zweiten Strömungsstrecke 7 in den Kanal 10 hinein ausgerichtet ist.

In der Ansicht der Figur 2, die einer Ansicht auf den Ringkatalysator entlang der Strömungsrichtung 4 in der ersten Strömungsstrecke 2 entspricht, ist gut zu erkennen, wie das Rohr 12 die erste Strömungsstrecke 2 kreuzt und derart vor der Einströmstelle 3 verläuft, dass das Rohr 12 von dem einströmenden Abgas umströmt wird.

In den Strömungsstecken innerhalb des Ringkatalysators 1 können unterschiedliche Wabenkörper, Filter oder sonstige Vorrichtungen zur Abgasnachbehandlung angeordnet sein.

Das in den Figuren 1 und 2 gezeigte Ausführungsbeispiel weist insbesondere keinen beschränkenden Charakter auf und dient der Verdeutlichung des Erfindungsgedankens.

## Patentansprüche

1. Abgassystem zur Nachbehandlung von Abgasen eines Verbrennungsmotors, mit einem von Abgas durchströmbaren Ringkatalysator (1), wobei der Ringkatalysator (1) eine Einströmstelle (3) und eine Ausströmstelle (11) aufweist und der Ringkatalysator (1) eine rohrförmige erste Strömungsstrecke (2) ausweist und eine ringförmige zweite Strömungsstrecke (7) aufweist, die konzentrisch zueinander ausgerichtet sind, und nacheinander durchströmbar sind, wobei die erste Strömungsstrecke (2) in radialer Richtung nach Außen von der zweiten Strömungsstrecke (7) umschlossen ist, **dadurch gekennzeichnet, dass** in radialer Richtung ein Rohr (12) von außen durch die zweite Strömungsstrecke (7) geführt ist, wobei das Rohr (12) in den Ringkatalysator (1) mündet und das Rohr (12) eine radiale Erstreckung zumindest bis in die innere erste Strömungsstrecke (2) hinein aufweist.

2. Abgassystem nach Anspruch 1, **dadurch gekennzeichnet, dass** das Abgas an einem ersten axialen Endbereich (9) des Ringkatalysators (1) durch die Einströmstelle (3) in die radial innere erste Strömungsstrecke (2) strömbar ist und an dem der Einströmstelle (3) gegenüberliegenden zweiten axialen Endbereich (5) des Ringkatalysators (1) durch eine Strömungsumlenkung in die radial äußere zweite Strömungsstrecke (7) strömbar ist, in welcher es entgegen der Strömungsrichtung (4) in der radial inneren ersten Strömungsstrecke (2) zurück zum ersten axialen Endbereich (9) strömbar ist, und wobei das Abgas an dem ersten axialen Endbereich (9) in einen Kanal (10) strömbar ist, der zu einer Ausströmstelle (11) führt.

3. Abgassystem nach einem der vorhergehenden Ansprüche, **dadurch gekennzeichnet, dass** eine wässrige Harnstofflösung in radialer Richtung in das Rohr (12) eindosierbar ist.

4. Abgassystem nach einem der vorhergehenden Ansprüche, **dadurch gekennzeichnet, dass** das Rohr (12) eine radiale Erstreckung durch die radial innere erste Strömungstrecke (2) hindurch bis in die radial äußere zweite Strömungsstrecke (7) aufweist.

5. Abgassystem nach einem der vorhergehenden Ansprüche, **dadurch gekennzeichnet, dass** das Rohr (12) einen sich konisch verjüngenden Querschnitt aufweist.

6. Abgassystem nach einem der vorhergehenden Ansprüche, **dadurch gekennzeichnet, dass** das Rohr (12) an dem axialen Endbereich (9) des Ringkatalysators (1) angeordnet ist, an dem das Abgas in den Ringkatalysator (1) durch die Einströmstelle (3) einströmbar ist.

7. Abgassystem nach einem der vorhergehenden Ansprüche, **dadurch gekennzeichnet, dass** das Rohr (12) an seiner inneren Mantelfläche und/oder an seiner äußeren Mantelfläche Oberflächenvergrößerungselemente aufweist.

8. Abgassystem nach einem der vorhergehenden Ansprüche, **dadurch gekennzeichnet, dass** das Rohr (12) an seiner inneren Mantelfläche und/oder an seiner äußeren Mantelfläche strukturiert ausgebildet ist und/oder beschichtet ist.

9. Abgassystem nach einem der vorhergehenden Ansprüche, **dadurch gekennzeichnet, dass** durch das Rohr (12) eine dritte Strömungsstrecke gebildet wird, die von dem Abgas in der ersten Strömungsstrecke (2) und der zweiten Strömungsstrecke (7) umströmbar ist.

10. Abgassystem nach einem der vorhergehenden Ansprüche, **dadurch gekennzeichnet, dass** in das Rohr (12) ein Hydrolysekatalysator integriert ist.

11. Abgassystem nach einem der vorhergehenden Ansprüche, **dadurch gekennzeichnet, dass** der Einströmstelle (3) ein Abgasturbolader vorgeschaltet ist, wobei das aus dem Abgasturbolader ausströmende Abgas durch die Einströmstelle (3) in den Ringkatalysator (1) einströmbar ist.

## Claims

1. Exhaust system for the aftertreatment of exhaust gases of an internal combustion engine, having an annular catalytic converter (1) through which exhaust gas can flow, wherein the annular catalytic converter (1) has an inflow point (3) and an outflow point (11) and the annular catalytic converter (1) has a tubular first flow path (2) and an annular second flow path (7) which are oriented concentrically with respect to one another and through which there can be successive flows, wherein the first flow path (2) is surrounded towards the outside in a radial direction by the second flow path (7), **characterized in that** a pipe (12) is led in the radial direction from the outside through the second flow path (7), wherein the pipe (12) opens into the annular catalytic converter (1) and the pipe (12) has a radial extent at least as far as into the inner first flow path (2).

2. Exhaust system according to Claim 1, **characterized in that** the exhaust gas can, at a first axial end region (9) of the annular catalytic converter (1), flow into the radially inner, first flow path (2) through the inflow point (3) and can flow into the radially outer, second flow path (7) by means of a flow diversion at the second axial end region (5), situated opposite the inflow point (3), of the annular catalytic converter (1), in which radially outer, second flow path said exhaust gas can flow back to the first axial end region (9) counter to the flow direction (4) in the radially inner, first flow path (2), and wherein the exhaust gas can, at the first axial end region (9), flow into a duct (10) which leads to an outflow point (11).

3. Exhaust system according to either of the preceding claims, **characterized in that** an aqueous urea solution can be metered in a radial direction into the pipe (12).

4. Exhaust system according to one of the preceding claims, **characterized in that** the pipe (12) has a radial extent through the radially inner, first flow path (2) into the radially outer, second flow path (7).

5. Exhaust system according to one of the preceding claims, **characterized in that** the pipe (12) has a conically tapering cross section.

6. Exhaust system according to one of the preceding claims, **characterized in that** the pipe (12) is arranged at that axial end region (9) of the annular catalytic converter (1) at which the exhaust gas can flow into the annular catalytic converter (1) through the inflow point (3).

7. Exhaust system according to one of the preceding claims, **characterized in that** the pipe (12) has surface-enlarging elements on its inner lateral surface and/or on its outer lateral surface.

8. Exhaust system according to one of the preceding claims, **characterized in that** the pipe (12) is embodied in a structured fashion and/or is coated on its inner lateral surface and/or on its outer lateral surface.

9. Exhaust system according to one of the preceding claims, **characterized in that,** by means of the pipe (12), a third flow path is formed around which the exhaust gas in the first flow path (2) and the second flow path (7) can flow.

10. Exhaust system according to one of the preceding claims, **characterized in that** a hydrolysis catalytic converter is integrated into the pipe (12).

11. Exhaust system according to one of the preceding claims, **characterized in that** an exhaust-gas turbocharger is connected upstream of the inflow point (3), wherein the exhaust gas flowing out of the exhaust-gas turbocharger can flow into annular catalytic converter (1) through the inflow point (3).

## Revendications

1. Système d'échappement pour le post-traitement des gaz d'échappement d'un moteur à combustion interne, comprenant un catalyseur annulaire (1) pouvant être traversé par des gaz d'échappement, le catalyseur annulaire (1) présentant un point d'admission (3) et un point d'échappement (11), et le catalyseur annulaire (1) présentant un premier trajet d'écoulement tubulaire (2) et un deuxième trajet d'écoulement tubulaire (7) qui sont alignés de manière concentrique l'un par rapport à l'autre et peuvent être traversés successivement, le premier trajet d'écoulement (2) étant entouré par le deuxième trajet d'écoulement (7) dans la direction radiale vers l'extérieur, **caractérisé en ce que** dans la direction radiale, un tuyau (12) est amené de l'extérieur à travers le deuxième trajet d'écoulement (7), le tuyau (12) débouchant sur le catalyseur annulaire (1), et le tuyau (12) présentant une dimension radiale au moins jusque dans le premier trajet d'écoulement intérieur (2).

2. Système d'échappement selon la revendication 1, **caractérisé en ce que** les gaz d'échappement, au niveau d'une première zone d'extrémité axiale (9) du catalyseur annulaire (1), peuvent être amenés à s'écouler par le point d'admission (3) dans le premier trajet d'écoulement (2) radialement intérieur, et au niveau de la deuxième zone d'extrémité axiale (5), opposée au point d'admission (3), du catalyseur annulaire (1), peuvent être amenés à s'écouler par une déviation d'écoulement dans le deuxième trajet d'écoulement (7) radialement extérieur, sur lequel ils peuvent être amenés à revenir à la première zone d'extrémité axiale (9), à l'opposé du sens d'écoulement (4) sur le premier trajet d'écoulement (2) radialement intérieur, et dans lequel les gaz d'échappement, au niveau de la première zone d'extrémité axiale (9), peuvent être amenés à s'écouler dans un canal (10) qui mène à un point d'échappement (11).

3. Système d'échappement selon l'une quelconque des revendications précédentes, **caractérisé en ce qu'**une solution aqueuse d'urée peut être dosée dans le tuyau (12) dans la direction radiale.

4. Système d'échappement selon l'une quelconque des revendications précédentes, **caractérisé en ce que** le tuyau (12) présente une dimension radiale à travers le premier trajet d'écoulement (2) radialement intérieur jusque dans le deuxième trajet d'écoulement (7) radialement extérieur.

5. Système d'échappement selon l'une quelconque des revendications précédentes, **caractérisé en ce que** le tuyau (12) présente une section transversale qui se rétrécit de manière conique.

6. Système d'échappement selon l'une quelconque des revendications précédentes, **caractérisé en ce que** le tuyau (12) est disposé au niveau de la zone d'extrémité axiale (9) du catalyseur annulaire (1) où les gaz d'échappement peuvent être amenés à s'écouler dans le catalyseur annulaire (1) par le point d'admission (3).

7. Système d'échappement selon l'une quelconque des revendications précédentes, **caractérisé en ce que** le tuyau (12) présente des éléments d'augmentation de surface sur sa surface latérale intérieure et/ou sur sa surface latérale extérieure.

8. Système d'échappement selon l'une quelconque des revendications précédentes, **caractérisé en ce que** le tuyau (12) est réalisé de manière structurée et/ou présente un revêtement sur sa surface latérale intérieure et/ou sur sa surface latérale extérieure.

9. Système d'échappement selon l'une quelconque des revendications précédentes, **caractérisé en ce que** le tuyau (12) forme un troisième trajet d'écoulement que l'écoulement des gaz d'échappement sur le premier trajet d'écoulement (2) et le deuxième trajet d'écoulement (7) peut entourer.

10. Système d'échappement selon l'une quelconque des revendications précédentes, **caractérisé en ce qu'**un catalyseur d'hydrolyse est intégré dans le tuyau (12).

11. Système d'échappement selon l'une quelconque des revendications précédentes, **caractérisé en ce qu'**un turbocompresseur de gaz d'échappement est placé en amont du point d'amission (3), les gaz d'échappement sortant du turbocompresseur de gaz d'échappement pouvant être amenés à s'écouler dans le catalyseur annulaire (1) par le point d'admission (3).
